# FASCICULE DE BREVET EUROPEEN

(11) **EP 2 736 772 B1**
(45) Date de publication et mention de la délivrance du brevet: **22.07.2015**
(21) Numéro de dépôt: 12740573.6
(22) Date de dépôt: 24.07.2012
(51) Int. Cl.: B60R 25/021

(54) **DISPOSITIF ANTIVOL POUR COLONNE DE DIRECTION ET COLONNE DE DIRECTION ASSOCIÉE**
DIEBSTAHLSICHERUNG FÜR EINE LENKSÄULE UND ZUGEHÖRIGE LENKSÄULE
ANTI-THEFT DEVICE FOR A STEERING COLUMN AND ASSOCIATED STEERING COLUMN

(30) Priorité: 25.07.2011 FR 1102312
(43) Date de publication de la demande: 04.06.2014
(73) Titulaire: U-Shin France SAS, 94046 Créteil Cedex (FR)
(72) Inventeur: PERRIN, Christophe, F-58160 Imphy (FR)
(74) Mandataire: Cabinet Novitech
(86) Numéro de dépôt international: PCT/EP2012/064549
(87) Numéro de publication internationale: WO 2013/014173

(56) Documents cités:
- EP-A1- 0 590 330
- EP-A2- 0 705 744
- WO-A1-02/085678
- FR-A1- 2 937 602
- US-A1- 2004 099 024

## Description

La présente invention est relative à un dispositif antivol pour colonne de direction. L'invention trouve une application particulièrement avantageuse dans le domaine automobile.

Elle concerne plus particulièrement un antivol de véhicule faisant intervenir un organe de verrouillage ou pêne de verrouillage de la colonne de direction d'un véhicule lors du retrait de la clé de contact À cet effet, le pêne est monté mobile dans le dispositif antivol entre une position de verrouillage de la colonne et une position de libération de la colonne.

On connaît par exemple des dispositifs antivol de la demande FR2937602 A1.

De tels antivols comprennent généralement un verrou avec un stator et un rotor actionné par une clé codée et commandant notamment au cours de sa rotation le mouvement du pêne.

Plus précisément, la commande du pêne peut s'effectuer par une tirette reliée à une came elle-même solidaire du rotor du verrou, ladite came ayant pour fonction de transformer le mouvement de rotation du rotor en un mouvement de translation de la tirette et du pêne associés.

Le verrou permet donc, via la tirette, de déverrouiller le pêne de la position où il bloque en rotation la colonne de direction.

Il existe des tentatives d'effraction dite douce durant lesquels, une personne malveillante essaie d'accéder à la tirette sans arracher le verrou, par exemple en procédant à un perçage.

Il est connu de proposer un dispositif de verrouillage comportant un élément de blocage en translation du pêne entre, une position de verrouillage lorsque le verrou est en position de verrouillage, et une position de repos dans laquelle l'élément de blocage libère le pêne lorsque le verrou est en position de fonctionnement. L'élément de blocage est sous la forme d'un levier monté pivotant et présentant une première extrémité apte à venir dans un renfoncement de la came et une deuxième extrémité opposée configurée pour s'opposer au déplacement du pêne.

Malgré les avantages que procure ce dispositif de verrouillage, il existe un besoin pour fournir un dispositif de verrouillage simple, efficace, moins encombrant et difficilement accessible de l'extérieur.

A cet effet, selon un premier aspect, l'invention a pour objet un dispositif de verrouillage pour colonne de direction de véhicule automobile, ledit dispositif comportant :
- un pêne monté mobile en translation dans ledit dispositif entre une position de verrouillage de la colonne de direction et une position de libération de ladite colonne, et
- un moyen de commande de déplacement dudit pêne,
ledit dispositif comportant en outre un moyen d'entraînement reliant le moyen de commande et le pêne, ledit moyen d'entraînement comprenant un logement recevant au moins une partie d'un élément de blocage lorsque l'élément de blocage est en position de repos et en position active, ledit élément de blocage étant configuré pour coopérer avec le moyen de commande de sorte à venir en position active bloquer le moyen d'entraînement lorsque le pêne est en position de verrouillage.

Grâce à l'invention, lorsque le véhicule automobile est en repos, le moyen d'entraînement est bloqué grâce à l'élément de blocage. De ce fait, le moyen d'entraînement ne peut plus être déplacé pour venir désengager le pêne de sa position de verrouillage.

L'élément de blocage permet ainsi de détecter la position de repos ou de verrouillage du moyen de commande.

Si une personne malveillante tente une effraction douce, par exemple en perçant un trou au niveau du moyen d'entraînement afin de mettre en mouvement ledit moyen d'entraînement, ce dernier ne peut être mis en mouvement et le pêne reste bloqué.

En outre, la configuration de l'élément de blocage disposé au moins partiellement dans un logement prévu dans le moyen d'entraînement rend très difficile l'accès par l'extérieur. En effet, le logement du moyen d'entraînement forme une protection autour de l'élément de blocage.

De plus, le dispositif de l'invention est compact. En effet, le moyen d'entraînement du pêne commandé par le moyen de commande loge l'élément de blocage.

Le dispositif de l'invention est en outre simple à utiliser et à fabriquer.

Ledit dispositif peut en outre comporter l'une ou plusieurs des caractéristiques suivantes, prises séparément ou en combinaison :
- ledit moyen d'entraînement comporte une première partie destinée à coopérer avec l'élément de blocage et une deuxième partie configurée pour entraîner le pêne en déplacement,
- la deuxième partie comporte un élément saillant apte à venir dans une fente complémentaire du pêne ce qui permet un entraînement efficace du pêne,
- l'élément de blocage est associé à un moyen de rappel élastique, au moins une partie dudit élément de blocage et le moyen de rappel élastique étant aptes à être reçus dans le logement du moyen d'entraînement ce qui permet de manière simple efficace et robuste de bloquer le moyen d'entraînement,
- le moyen de rappel élastique est un ressort en compression ce qui permet de mettre en permanence sous tension le pion,
- le moyen de commande comporte un orifice apte à recevoir l'extrémité libre de l'élément de blocage ce qui permet de manière simple et efficace de bloquer le moyen de commande,
- le moyen d'entraînement et le moyen de commande sont configurés de sorte à présenter une course morte l'un par rapport à l'autre,
- le moyen de commande comporte une came configurée pour être solidarisée à un rotor d'un verrou et pour commander le déplacement dudit pêne et le mouvement dudit moyen d'entraînement ce qui permet de transmettre le mouvement de rotation de la came au moyen d'entraînement,
- l'orifice est délimité par une paroi sensiblement en pente formant rampe de guidage pour l'extrémité ce qui permet un déblocage de l'élément de blocage aisé.

L'invention concerne aussi une colonne de direction de véhicule automobile comprenant un dispositif antivol tel que défini ci-dessus.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente schématiquement une vue en perspective de côté d'un mode de réalisation d'un dispositif antivol selon l'invention,
- la figure 2 est une vue en perspective du dessus du moyen d'entraînement et de l'élément de blocage de la figure 1 disposé dans une coque de protection;
- la figure 3 est une coupe transversale du moyen d'entraînement et de l'élément de blocage selon le plan III-III de la figure 1,
- la figure 4 est une vue de côté de la coupe de la figure 3,
la figure 5 est une coupe longitudinale du moyen d'entraînement et de l'élément de blocage selon le plan V-V de la figure 3.

Dans ces figures, les éléments sensiblement identiques portent les mêmes références.

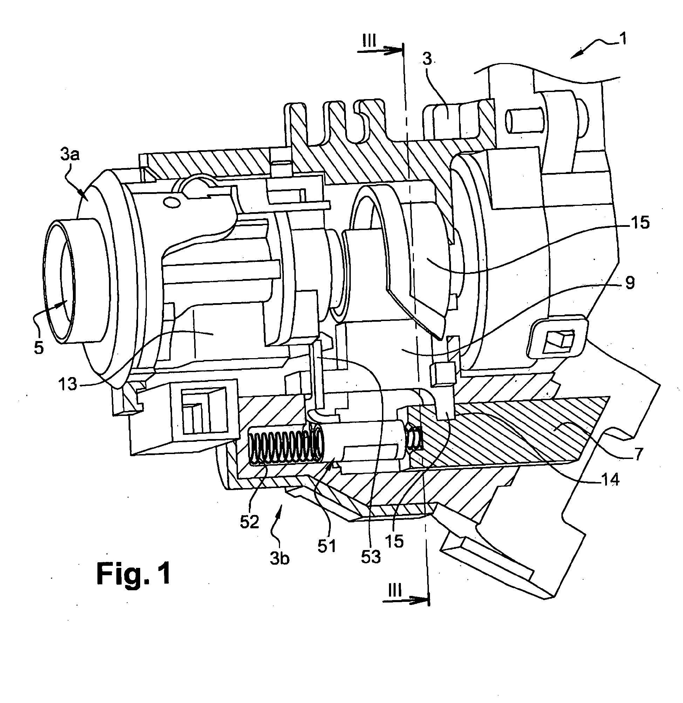

On a représenté sur la figure 1, un dispositif antivol pour véhicule automobile, selon l'invention, désigné par la référence générale 1. Ce dispositif antivol 1 est destiné à commander le démarrage d'un moteur du véhicule et le verrouillage d'une colonne de direction du véhicule (non représentée).

Le dispositif antivol 1 présente un corps d'antivol 3 sous la forme d'une coque de protection.

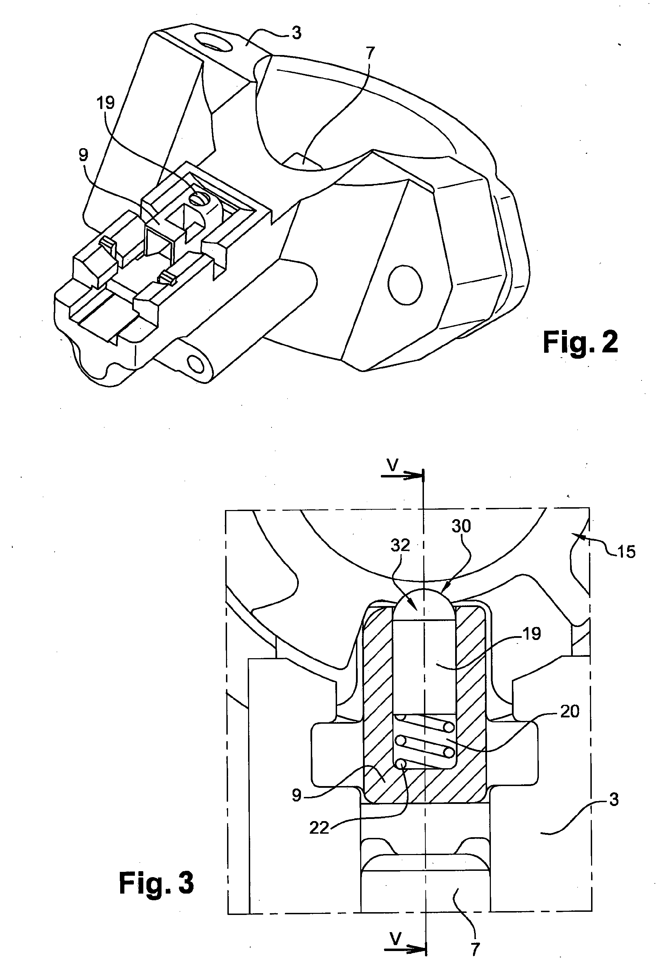

Ce corps d'antivol 3 comprend un verrou 5, un pêne 7 de verrouillage de la colonne de direction (non représentée), et un moyen d'entraînement 9 associé à un élément de blocage 19 (mieux visible sur la figure 2) du pêne 7 de verrouillage.

Dans l'exemple illustré sur la figure 1, le corps d'antivol 3 présente une première partie avant 3a logeant le verrou 5 et une deuxième partie arrière 3b logeant le pêne 7.

Les termes « avant » et « arrière » sont ici utilisés par rapport à l'accessibilité à un utilisateur. L'utilisateur a accès à la partie avant 3a du corps antivol 3 pour insérer sa clé de contact. La partie arrière 3b du corps d'antivol 3 est quant à elle à proximité de la colonne de direction.

Le verrou 5 comprend un rotor (non visible) monté rotatif dans un stator 13.

Selon le mode de réalisation illustré, le verrou 5 présente en outre une came 15 solidarisée au rotor, par exemple agencée à l'extrémité arrière du rotor.

La came 15 présente un corps de forme générale cylindrique coaxiale au rotor. Le rotor entraîne donc en rotation cette came 15.

Le verrou 5 est mobile entre une position de verrouillage et au moins une position de fonctionnement.

Lorsque l'utilisateur tourne la clé de contact dans le rotor 11, le verrou est en position de fonctionnement de façon à commander par exemple les accessoires du véhicule ou le démarrage. On peut prévoir des positions angulaires différentes du rotor pour la commande des accessoires et du démarrage.

En position de verrouillage, la clé n'est pas introduite dans le rotor ou la clé est insérée mais n'est pas tournée vers une des positions angulaires de fonctionnement.

Le pêne 7 est monté coulissant dans le corps d'antivol 3. À cet effet, le corps d'antivol 3 peut présenter au niveau de sa partie arrière 3b un guide pêne (non représenté) pour le coulissement du pêne 7.

Le pêne 7 est mobile entre une position de verrouillage de la colonne de direction (non représentée) et une position de libération de cette colonne.

Dans la position de verrouillage, le pêne 7 engage de manière classique une partie de la colonne de direction (non représentée) pour la bloquer en rotation. Dans cette position de verrouillage, le pêne 7 fait généralement sailiie par rapport au corps d'antivol 3.

Par contre en position de libération, le pêne 7 est escamoté à l'intérieur du corps d'antivol 3 pour libérer la colonne.

Le dispositif de l'invention comprend un moyen de commande, ici sous la forme de la came 15, du déplacement du pêne 7 de verrouillage entre les positions de verrouillage et de libération de la colonne de direction (non représentée). Le moyen de commande 15 commande le déplacement du pêne 7 en position de verrouillage lorsque le verrou 5 est en position de verrouillage. En position de fonctionnement du verrou 5, le pêne 7 reste en position de libération de la colonne.

Ledit dispositif de l'invention comporte en outre un moyen d'entraînement 9 reliant le moyen de commande 15 et le pêne 7.

Le moyen d'entraînement 9 est configuré pour entraîner en translation de pêne 7 lorsque le moyen de commande, ici la came 15 est mise en rotation.

Pour ce faire, ledit moyen d'entraînement 9 peut comporter une première partie (non visible) destinée à coopérer avec le moyen de commande, ici la came 15, et une deuxième partie 14 configurée pour entraîner le pêne en déplacement 7.

Pour ce faire, la première partie peut être une partie sensiblement arrondie du moyen d'entraînement destinée à coopérer avec la came 15 par l'intermédiaire d'une pièce 17 formant rampe. Le moyen d'entraînement 9 et le moyen de commande, ici sous la forme de la came 15, peuvent être configurés de sorte à présenter une course morte l'un par rapport à l'autre, notamment au niveau de la liaison entre la partie sensiblement arrondie du moyen d'entraînement 9 et la rampe 17 de la came. Ainsi, de manière avantageuse, lorsque le moyen de blocage se désengage du moyen de commande, le moyen d'entraînement est mis en mouvement dans un second temps par le moyen de commande, ici la came.

La deuxième partie 14 peut comporter un élément saillant 16 apte à venir dans une fente (non visible sur les figures) complémentaire du pêne 7 ce qui permet un entraînement efficace et durable du pêne 7.

Le moyen d'entraînement 9 comprend en outre un logement 20 recevant au moins une partie d'un élément de blocage 19 lorsque l'élément de blocage 19 est en position de repos et en position active, ledit élément de blocage 19 étant configuré pour coopérer avec le moyen de commande de sorte à venir en position active bloquer le moyen d'entraînement 9 lorsque le pêne 7 est en position de verrouillage.

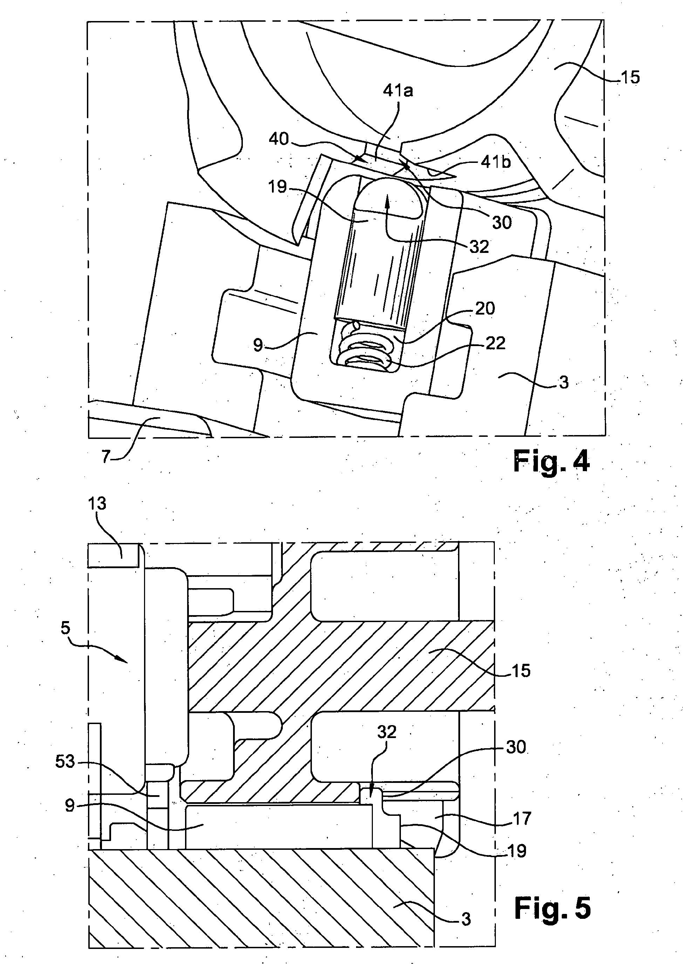

Ce élément de blocage 19 est mobile entre une position active, visible sur les figures 3 et 5, et une position de repos visible sur la figure 4.

L'élément de blocage 19 permet ainsi de détecter la position de verrouillage du rotor et de bloquer dans cette position le pêne 7.

Grâce à l'invention, lorsque le véhicule automobile est en repos, le moyen de commande est bloqué grâce à l'élément de blocage 19. De ce fait, le moyen d'entraînement 9 ne peut plus être déplacé pour venir désengager le pêne 7 de sa position de verrouillage.

Si une personne malveillante tente une effraction douce, par exemple en perçant un trou au niveau du moyen d'entraînement 9 afin de mettre en mouvement ledit moyen d'entraînement 9, ce dernier ne peut pas être mis en mouvement et le pêne 7 reste bloqué.

De plus, le dispositif de l'invention 1 est compact. En effet, le moyen d'entraînement 9 du pêne commandé par le moyen de commande loge l'élément de blocage 19.

La configuration de l'élément de blocage 19 disposé au moins partiellement dans un logement 20 prévu dans le moyen d'entraînement 9 rend très difficile l'accès par l'extérieur. En effet, le logement 20 du moyen d'entraînement forme une protection autour de l'élément de blocage 9.

Le logement 20 forme ainsi une coque de protection pour l'élément de blocage 19.

Le logement 20 a des dimensions suffisantes pour permettre la réception de l'élément de biocage 19 et éventuellement des moyens de mise en mouvement dudit élément 19.

Ainsi, l'élément de blocage 19 peut être partiellement contenu dans le logement, voire intégralement à l'exception de la partie coopérant avec le moyen de blocage.

Selon le mode de réalisation représenté sur les figures, l'élément de blocage 19 est associé à un moyen de rappel élastique 22 comme représenté sur les figures. Au moins une partie dudit élément de blocage 19 et le moyen de rappel élastique 22 sont aptes à être reçus dans le logement du moyen d'entraînement. Ceci permet de manière simple, efficace et robuste de bloquer le moyen d'entraînement dans son déplacement, ici la translation.

L'élément de blocage peut être de toute autre forme, notamment un pion. Ainsi, l'élément de blocage peut être sous la forme d'une plaque métallique ou plastique ou encore.sous la forme d'un levier.

L'élément de blocage comporte une extrémité libre 32 destinée à venir bloquer le moyen d'entraînement et une extrémité destinée à coopérer avec le moyen de retour élastique 22.

Le moyen de rappel élastique 22 peut être un ressort en compression ce qui permet de mettre en permanence le pion sous tension. Le moyen de rappel élastique 22 permet ainsi de manière avantageuse au pion de passer de la position active à la position de repos.

Le moyen de commande peut comporter un orifice 30 apte à recevoir l'extrémité libre 32 de l'élément de blocage ce qui permet de manière simple et efficace de bloquer le moyen d'entraînement.

L'orifice 30 peut être fermé ou bien ouvert, comme représenté sur la figure 4.

L'orifice 30 a une dimension et de forme adaptées à la taille de l'extrémité libre 32 destinée à coopérer. L'orifice 30 peut être circulaire ou bien sensiblement ovale.

L'extrémité libre 32 peut être par exemple en forme sensiblement en d'ogive ou tout autre forme saillante apte à venir dans un dégagement 30 prévu dans la paroi de la came 15. L'extrémité libre 32 peut présenter comme c'est le cas ici une ou plusieurs parties tronquées.

Comme représenté sur les figures 3 et 5, la position active de l'élément de blocage correspond ici à la position où le pion est dans l'orifice 30.

Comme représenté sur la figure 4, la position de repos correspond à la position où le pion est à distance de l'orifice.

L'orifice 30 peut en outre être délimité par une paroi 40 sensiblement en pente formant rampe de guidage pour l'extrémité libre 32 ce qui permet au pion 20 de se désengager de la came 15 et de débloquer le moyen d'entraînement 9 lorsque la came 15 est mise en rotation par le rotor (voir figure 4). Ainsi, en position active, seule l'extrémité 32 est dégagée du logement 20 pour venir se bloquer dans la came 15.

Selon une variante non représentée, le dispositif de l'invention 1 peut comporter en outre des moyens de renfort disposés sensiblement le long du moyen d'entraînement 9 au niveau de l'élément de blocage 19 ce qui permet de rendre encore plus difficile l'accès à l'élément de blocage 19.

Ainsi, lorsque le verrou 5 est en position de verrouillage, l'élément de blocage 19 se place en position active dans laquelle l'extrémité 32 du pion vient dans l'orifice 30. Ceci à pour effet de bloquer le moyen d'entraînement 9 en translation. Le reste du corps du pion 32 est inséré dans le logement 20 et protégé par ce dernier. Dans cette configuration, le moyen d'entraînement 9 ne peut plus entraîner en translation le pêne 7 qui reste bloqué.

Lorsque le verrou 5 est en position de fonctionnement et donc mis en rotation, ledit verrou 5 entraîne la came 15 en rotation. L'extrémité 32 du pion est entraînée via la rampe 41a ou 41b formée par la paroi 40 à se dégager de la came 15. Le moyen d'entraînement 9 devient mobile et peut entraîner en translation le pêne 7 afin de déverrouiller ce dernier.

Le dispositif peut également comporter un moyen de supercondamnation permettant de bloquer le pêne 7 lorsque le verrou 5 est arraché. Selon le mode de réalisation représenté sur la figure 1, le moyen de supercondamnation comporte un pion de condamnation 51 interposé entre le pêne 7 et le ressort en compression 52 permettant de bloquer la translation du pêne 7 lors de la détection d'une attaque.

Le pion 51 est associé à une plaquette 53 liée au stator 13. La plaquette 53 est configurée pour maintenir le pion 52 bloqué dans une position où il ne bloque pas le pêne 7. Lorsque verrou 5 est arraché, la plaquette se désengage du pion 51 qui vient alors se bloquer en bloquant le pêne 7.

## Revendications

1. Dispositif antivol (1) pour colonne de direction de véhicule automobile, ledit dispositif (1) comportant:
- un pêne (7) monté mobile en translation dans ledit dispositif (1) entre une position de verrouillage de la colonne de direction et une position de libération de ladite colonne, et
- un moyen de commande de déplacement (15) dudit pêne (7),
ledit dispositif (1) comportant en outre un moyen d'entraînement (9) reliant le moyen de commande (15) et le pêne (7), ledit moyen d'entraînement (9) comprenant un logement (20) recevant au moins une partie d'un élément de blocage (19) lorsque l'élément de blocage (19) est en position de repos et en position active, ledit élément de blocage (19) étant configuré pour coopérer avec le moyen de commande de sorte à venir en position active bloquer le moyen d'entraînement (9) lorsque le pêne (7) est en position de verrouillage.

2. Dispositif (1) selon la revendication 1, dans lequel ledit moyen d'entraînement (9) comporte une première partie destinée à coopérer avec l'élément de blocage et une deuxième partie (14) configurée pour entraîner le pêne (7) en déplacement.

3. Dispositif (1) selon la revendication précédente, dans lequel la deuxième partie (14) comporte un élément saillant (14) apte à venir dans une fente complémentaire du pêne (7).

4. Dispositif (1) selon l'une quelconque des revendications précédentes, dans lequel l'élément de blocage (19) est associé à un moyen de rappel élastique (22), au moins une partie dudit élément de blocage (19) et le moyen de rappel élastique (22) étant aptes à être reçus dans le logement (20) du moyen d'entraînement (9).

5. Dispositif (1) selon la revendication précédente, dans lequel le moyen de rappel élastique (20) est un ressorten compression.

6. Dispositif (1) selon l'une quelconque des revendications précédentes, dans lequel le moyen de commande (15) comporte un orifice (30) apte à recevoir l'extrémité libre (32) de l'élément de blocage (19).

7. Dispositif (1) selon la revendication précédente, dans lequel le moyen d'entraînement (9) et le moyen de commande (15) sont configurés de sorte à présenter une course morte l'un par rapport à l'autre.

8. Dispositif (1) selon l'une quelconque des revendications précédentes, dans lequel l'orifice (30) est délimité par une paroi (40) sensiblement en pente formant rampe (41a, 41b) de guidage pour l'extrémité (32).

9. Dispositif (1) selon l'une quelconque des revendications précédentes, dans lequel le moyen de commande (8) comporte une came (15) configurée pour être solidarisée à un rotor (11) d'un verrou et pour commander le déplacement dudit pêne (7) et le mouvement dudit moyen d'entraînement (9).

10. Colonne de direction pour véhicule automobile comportant un dispositif antivol (1) conforme à l'une quelconque des revendications précédentes.

## Patentansprüche

1. Diebstahlsicherungsvorrichtung (1) für die Lenksäule eines Kraftfahrzeugs, wobei die Vorrichtung (1) Folgendes umfasst:
- einen Schlossriegel (7), der beweglich in Translation in der Vorrichtung (1) zwischen einer Verriegelungsposition der Lenksäule und einer Freigabeposition der Lenksäule montiert ist, und
- ein Steuermittel zur Verschiebung (15) des Schlossriegels (7),
wobei die Vorrichtung (1) außerdem ein Antriebsmittel (9) umfasst, das das Steuermittel (15) und den Schlossriegel (7) miteinander verbindet, wobei das Antriebsmittel (9) eine Aufnahme (20) umfasst, die mindestens einen Teil eines Blockierungselements (19) aufnimmt, wenn sich das Blockierungselement (19) in der Ruheposition und in der aktiven Position befindet, wobei das Blockierungselement (19) konfiguriert ist, um mit dem Steuermittel derart zusammenzuarbeiten, um in der aktiven Position das Antriebsmittel (9) zu blockieren, wenn sich der Schlossriegel (7) in der Verriegelungsposition befindet.

2. Vorrichtung (1) nach Anspruch 1, wobei das Antriebsmittel (9) einen ersten Teil umfasst, der ausgelegt ist, um mit dem Blockierungselement zusammenzuarbeiten, und einen zweiten Teil (14), der konfiguriert ist, um den Schlossriegel (7) zu verschieben.

3. Vorrichtung (1) nach dem vorhergehenden Anspruch, wobei der zweite Teil (14) ein hervorspringendes Element (14) umfasst, das geeignet ist, um in einen zusätzlichen Schlitz des Schlossriegels (7) zu gelangen.

4. Vorrichtung (1) nach einem der vorhergehenden Ansprüche, wobei das Blockierungselement (19) mit mindestens einem elastischen Rückstellmittel (22) assoziiert ist, wobei mindestens ein Teil des Blockierungselements (19) und des elastischen Rückstellmittels (22) geeignet sind, um in die Aufnahme (20) des Antriebsmittels (9) aufgenommen zu werden.

5. Vorrichtung (1) nach dem vorhergehenden Anspruch, wobei das elastische Rückstellmittel (20) eine elastische Druckfeder ist.

6. Vorrichtung (1) nach einem der vorhergehenden Ansprüche, wobei das Steuermittel (15) eine Öffnung (30) umfasst, die geeignet ist, um das freie Ende (32) des Blockierungselements (19) aufzunehmen.

7. Vorrichtung (1) nach dem vorhergehenden Anspruch, wobei das Antriebsmittel (9) und das Steuermittel (15) derart konfiguriert sind, dass sie mit Bezug aufeinander einen Totweg aufweisen.

8. Vorrichtung (1) nach einem der vorhergehenden Ansprüche, wobei die Öffnung (30) durch eine Wand (40) begrenzt ist, die im Wesentlichen geneigt ist, die eine Führungsrampe (41a, 41b) für das Ende (32) bildet.

9. Vorrichtung (1) nach einem der vorhergehenden Ansprüche, wobei das Steuermittel (8) einen Nocken (15) umfasst, der konfiguriert ist, um mit einem Rotor (11) einer Klinke fest verbunden zu sein, und um die Verschiebung des Schlossriegels (7) und die Bewegung des Antriebsmittels (9) zu steuern.

10. Lenksäule für Kraftfahrzeug, umfassend eine Diebstahlsicherungsvorrichtung (1) nach einem der vorhergehenden Ansprüche.

## Claims

1. Anti-theft device (1) for a steering column of a motor vehicle, said device (1) comprising:
- a bolt (7) mounted mobile in translation in said device (1) between a locked position of the steering column and a released position of said column, and
- a means for controlling the movement (15) of said bolt (7),
with said device (1) further comprising a drive means (9) connecting the control means (15) and the bolt (7), with said drive means (9) comprising a housing (20) that receives at least a portion of the locking element (19) when the locking element (19) in the rest and active positions, said locking element (19) being configured to cooperate with the control means in such a way as, in the active position, to lock the drive means (9) when the bolt (7) is in locked position.

2. Device (1) according to claim 1, wherein said drive means (9) comprises a first portion intended to cooperate with the locking element and a second portion (14) configured to drive the bolt (7) in movement.

3. Device (1) according to the preceding claim, wherein the second portion (14) comprises a protruding element (14) able to come into a complementary slot of the bolt (7).

4. Device (1) according to any of the preceding claims, wherein the locking element (19) is associated with an elastic means of return (22), with at least one portion of said locking element (19) and the elastic means of return (22) able to be received in the housing (20) of the drive means (9).

5. Device (1) according to the preceding claim, wherein the elastic means of return (20) is a compression spring.

6. Device (1) according to any of the preceding claims, wherein the control means (15) comprises an orifice (30) able to receive the free end (32) of the locking element (19).

7. Device (1) according to the preceding claim, wherein the drive means (9) and the control means (15) are configured in such a way as to have a dead zone in relation to one another.

8. Device (1) according to any of the preceding claims, wherein the orifice (30) is delimited by a substantially sloped wall (40) forming a guiding ramp (41a, 41b) for the end (32).

9. Device (1) according to any of the preceding claims, wherein the control means (8) comprises a cam (15) configured to be made integral with a rotor (11) of a lock and for controlling the movement of said bolt (7) and the movement of said drive means (9).

10. Steering column of a motor vehicle comprising an anti-theft device (1) according to any of the preceding claims.
